(19) Europäisches Patentamt / European Patent Office / Office européen des brevets

(11) **EP 4 750 045 A1**

(12) **EUROPEAN PATENT APPLICATION**

(43) Date of publication:
27.05.2026 Bulletin 2026/22

(21) Application number: 25216180.7

(22) Date of filing: **17.11.2025**

(51) International Patent Classification (IPC):
*H04N 1/60* (2006.01)  *G06T 5/92* (2024.01)

(52) Cooperative Patent Classification (CPC):
**H04N 1/6063; G06T 5/92**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.11.2024 KR 20240166899**

(71) Applicant: **LG Electronics Inc.**
**Yeongdeungpo-gu**
**Seoul 07336 (KR)**

(72) Inventors:
• **LEE, Chanho**
  **Seoul (KR)**
• **NAM, Sangchurl**
  **Seoul (KR)**

(74) Representative: **Schott, Jakob Valentin**
**Wuesthoff & Wuesthoff**
**Patentanwälte und Rechtsanwalt PartG mbB**
**Schweigerstraße 2**
**81541 München (DE)**

(54) **IMAGE PROCESSING DEVICE, OPERATING METHOD THE IMAGE PROCESSING DEVICE AND RECORDING MEDIUM**

(57) An image processing device according to an embodiment of the present disclosure may comprise at least one processor configured to: convert a first image data of a first color space to a second image data of a second color space through a gamut mapping, obtain a luminance level of the second image data, obtain a saturation correction value corresponding to the obtained luminance level, and adjust a saturation of the second image data based on the obtained saturation correction value while maintaining the obtained luminance level.

EP 4 750 045 A1

**Description**

BACKGROUND OF THE INVENTION

1.Field of the Invention

The present disclosure relates to an image processing device, and more specifically, to an image processing device capable of improving a color accuracy.

2. Discussion of the Related Art

In general, imaging devices or display devices may only capture or reproduce limited colors compared to natural colors that humans may perceive. Usually, the range of colors that may be reproduced is determined by primary color coordinates, and this color reproduction range is called the color gamut.

Generally, display devices use the RGB color space and form a color gamut using three primary colors, red, green, and blue, which may be added to each other.

However, if the color gamut between the output display device and the input imaging device is different, the color of the input image and the color of the output image are not the same. Additionally, if the same input is output through a display device with a different color gamut, the colors of the output image are expressed differently.

When reproducing colors between devices with different color gamuts, it is necessary to adjust the data to achieve the intended reproduction, and this is called gamut mapping.

However, conventionally, the gamut mapping was performed regardless of the gray of the image. Accordingly, in cases such as HDR (High Dynamic Range) image, when color gamut mapping, the gamut size is narrowed for each gray level, causing a problem in which the colors are distorted.

SUMMARY OF THE INVENTION

The purpose of the present disclosure may be to improve color accuracy by correcting color distortion after gamut mapping of an image.

The purpose of the present disclosure may be to improve color reproduction accuracy through saturation correction of image data for each luminance level after gamut mapping of the image.

The purpose of the present disclosure may be to improve color accuracy while maintaining the luminance level after the gamut mapping.

An image processing device according to an embodiment of the present disclosure may comprise at least one processor configured to: convert a first image data of a first color space to a second image data of a second color space through a gamut mapping, obtain a luminance level of the second image data, obtain a saturation correction value corresponding to the obtained luminance level, and adjust a saturation of the second image data based on the obtained saturation correction value while maintaining the obtained luminance level

A method of operating an image processing device according to an embodiment of the present disclosure may comprise: converting a first image data of a first color space to a second image data of a second color space through a gamut mapping; obtaining a luminance level of the second image data; obtaining a saturation correction value corresponding to the obtained luminance level; and adjusting a saturation of the second image data based on the obtained saturation correction value while maintaining the obtained luminance level.

A non-transitory computer-readable recording medium on which a program for performing a method of operating an image processing device is recorded, according to an embodiment of the present disclosure, wherein the method may comprise converting a first image data of a first color space to a second image data of a second color space through a gamut mapping; obtaining a luminance level of the second image data; obtaining a saturation correction value corresponding to the obtained luminance level; and adjusting a saturation of the second image data based on the obtained saturation correction value while maintaining the obtained luminance level.

According to an embodiment of the present disclosure, color accuracy may be improved by correcting color distortion after color gamut mapping.

According to an embodiment of the present disclosure, color gamut may be greatly improved through saturation correction of image data for each brightness level.

According to an embodiment of the present disclosure, color accuracy may be improved while maintaining the luminance level after gemmapping.

## BRIEF DESCRIPTION OF THE DRAWINGS

FIG. 1 is a block diagram illustrating a configuration of a display device according to an embodiment of the present disclosure.

FIG. 2 is a diagram for explaining the configuration of an image processing device according to an embodiment of the present disclosure.

FIG. 3 is a flowchart illustrating a method of operating an image processing device according to an embodiment of the present disclosure.

FIG. 4 is a diagram showing an example of color gamut conversion after Gamut mapping according to an embodiment of the present disclosure.

FIG. 5 is a diagram illustrating that color accuracy decreases in the low gray level area when the gamut mapping is applied regardless of the gray level of an image according to the prior art.

FIG. 6A and FIG. 6B are diagrams showing that the gamut size increases as the saturation correction value is adjusted after the gamet mapping according to an embodiment of the present disclosure.

FIGS. 7A to 8B are diagrams for comparing a case where a saturation correction value is not applied to image data after the gamut mapping and a case where a saturation correction value is applied to image data after the gemut mapping according to an embodiment of the present disclosure.

FIG. 9 is a diagram illustrating a method of checking color accuracy by measuring coordinate values on the CIE 1976u'v' chromaticity diagram to check whether an embodiment of the present disclosure is applicable.

## DETAILED DESCRIPTION OF THE PREFERRED EMBODIMENTS

Hereinafter, the present disclosure will be described in more detail with reference to the drawings. Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

The display device according to an embodiment of the present disclosure is, for example, an intelligent display device in which a computer support function is added to a broadcast reception function, and is faithful to a broadcast reception function and has an Internet function added thereto, such as a handwritten input device, a touch screen Alternatively, a more user-friendly interface such as a spatial remote control may be provided. In addition, it is connected to the Internet and a computer with the support of a wired or wireless Internet function, so that functions such as e-mail, web browsing, banking, or games may also be performed. A standardized general-purpose OS may be used for these various functions.

Accordingly, in the display device described in the present disclosure, various user-friendly functions may be performed because various applications may be freely added or deleted, for example, on a general-purpose OS kernel. More specifically, the display device may be, for example, a network TV, HBBTV, smart TV, LED TV, OLED TV, and the like, and may be applied to a smart phone in some cases.

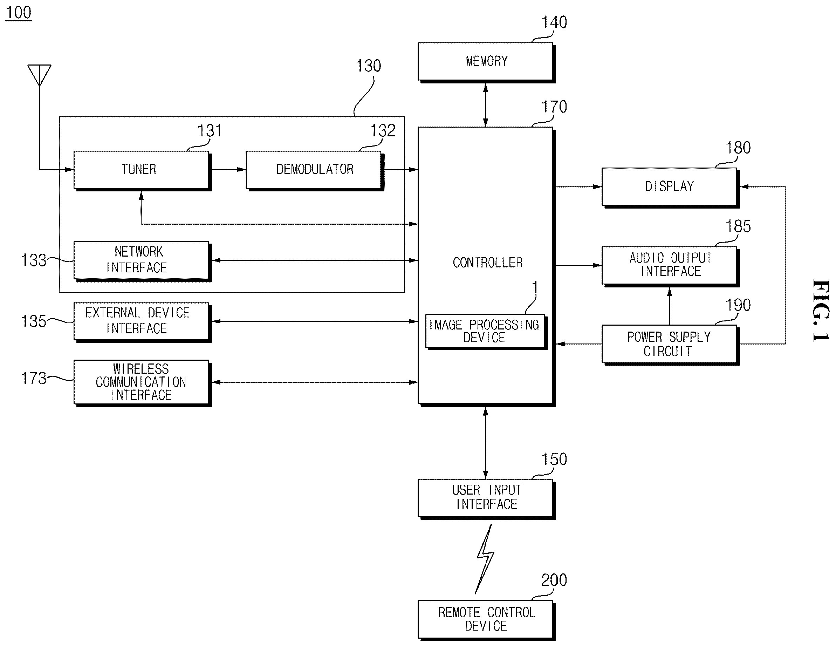

FIG. 1 is a block diagram showing a configuration of a display device according to an embodiment of the present disclosure.

Referring to FIG. 1, a display device 100 may include an image receiver 130, an external device interface 135, a memory 140, a user input interface 150, a controller 170, a wireless communication interface 173, a display 180, a speaker 185, and a power supply circuit 190.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface unit 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a content provider or a network operator. That is, the network interface 133 may receive content such as movies, advertisements, games, VOD, and broadcast signals and information related thereto provided from a content provider or a network provider through a network.

In addition, the network interface 133 may receive update information and update files of firmware provided by the network operator, and may transmit data to an Internet or content provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play back a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing back an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface unit or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played back, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Blue-tooth™, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, the another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play back the same.

For example, the display device 100 may be divided into an image processing device, such as a set-top box, for receiving broadcast signals or content according to various network services, and a content playback device that plays back content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 the speaker 185.

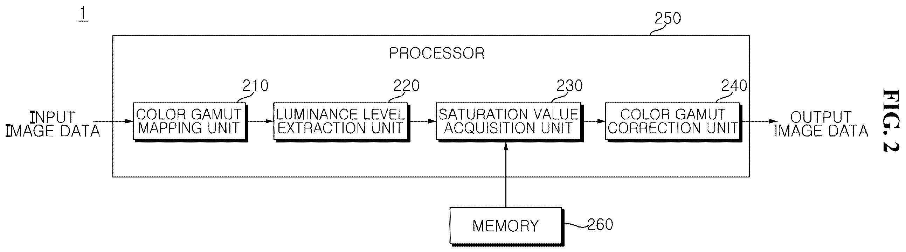

FIG. 2 is a diagram for explaining the configuration of an image processing device according to an embodiment of the present disclosure.

In one embodiment, the image processing device 1 may be included in the controller 170 of FIG. 1 .

In another embodiment, the image processing device 1 is included in the display device 100. It may be a component provided separately from the controller 170 of FIG. 1.

The image processing device 1 may include a processor 250 and a memory 260. One or more processors 250 may be provided.

The processor 250 may include a color gamut mapping unit 210, a luminance level extraction unit 220, a saturation value acquisition unit 230, and a color gamut correction unit 240.

The color gamut mapping unit 210 may convert a first image data of a first color space obtained through a gamut mapping into a second image data of a second color space.

The luminance level extractor 220 may extract the luminance level (Y level) of the second image data of the second color space. The luminance level extractor 220 may calculate the luminance level based on the second image data of the second color space.

The saturation value acquisition unit 230 may obtain a saturation correction value corresponding to the luminance level. The saturation value acquisition unit 230 may obtain a saturation correction value corresponding to the luminance level range to which the obtained luminance level belongs.

The color gamut correction unit 240 may obtain a corrected image data of the second color gamut according to the saturation correction value corresponding to the luminance level while maintaining the luminance level of the second image data of the second color space.

The memory 260 may store a plurality of saturation correction values corresponding to each of a plurality of luminance level ranges. The image processing device 1 may, from the memory 260, extract a saturation correction value corresponding to the luminance level range to which the obtained luminance level belongs.

In another embodiment, the memory 260 may store a curve lookup table for a saturation correction. The curve lookup table may be a table representing a curve that maps the saturation correction value according to the luminance level of the second image data of the second color space. The curved lookup table may be a table used to correct only saturation while maintaining the luminance level.

The memory 260 may be the memory 140 of FIG. 1 or may be a separate component.

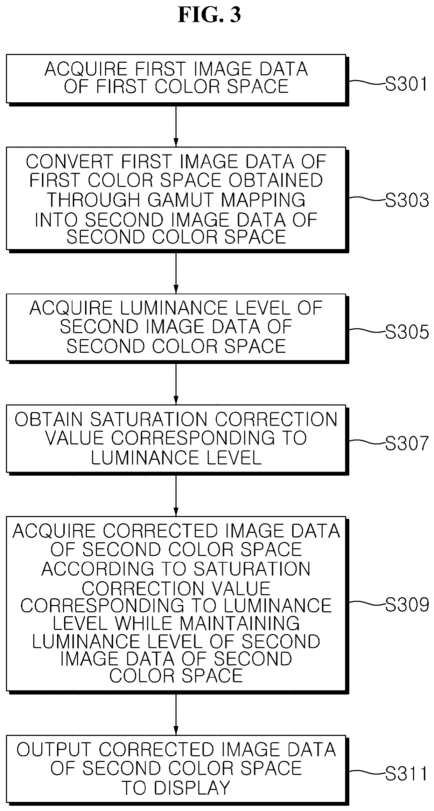

FIG. 3 is a flowchart illustrating a method of operating an image processing device according to an embodiment of the present disclosure.

Referring to FIG. 3, the image processing device 1 may acquire the first image data of the first color space (S301).

The image data may be data received from the tuner 131, the network interface 133, or the external device interface 135. The image data may be a high dynamic range (HDR) image.

The first image data may include a plurality of image data corresponding to one scene. Each of the plurality of image data may be data corresponding to each of the plurality of pixels constituting the display 180. Each image data may be RGB data.

The first image data may be first image data of a first color space that has not undergone color gamut mapping.

The first color space may be an RGB-based color space.

When the first image data is HDR image data, the image processing device 1 may perform HDR processing on the first image data of the first color space.

The HDR processing may include an Electro-Optical Transfer Function (EOTF) processing, a tone mapping, and an Opto-Electrical Transfer Function (OETF) processing.

The EOTF processing may be a process of converting an electrical signal of an HDR image into a brightness signal.

The tone mapping may be a process of adjusting a brightness and a contrast ratio of the HDR image according to a maximum brightness range of the display 180 based on the converted brightness signal.

The OETF processing may be a process of reconverting the brightness signal of an HDR image into the electrical signal after the tone mapping.

The image processing device 1 may convert the first image data of the first color space obtained through gamut mapping into the second image data of the second color space (S303).

The Gamut mapping may be a process of converting an RGB-based color space to a standard color space. Each of the first color space and the second color space may be an RGB-based color space, but this is only an example.

The secondary color space may comply with either BT.709 or BT. 2000.

The gamut mapping may be a mapping that adjusts a color within the color range that may be expressed while minimizing a color distortion when performing color conversion of devices or color spaces with different color expression ranges.

Gamut may be referred to as a Color Gamut. The gamut mapping may be referred to as color gamut mapping.

The image processing device 1 may convert the first image data of the first color space into the second image data of the second color space through a 3x3 Gamut matrix. The 3x3 Gamut matrix may vary depending on a relationship between the two color spaces to be converted.

The image processing device 1 may convert the first image data (RGB) of the first color space into the second image data (R'G'B') of the second color space according to the following [Equation 1].

[Equation 1]

$$\left\{ \begin{array}{c} R' \\ G' \\ B' \end{array} \right\} = \{3 \text{ X } 3 \text{ Matrix}\} \cdot \left\{ \begin{array}{c} R \\ G \\ B \end{array} \right\}$$

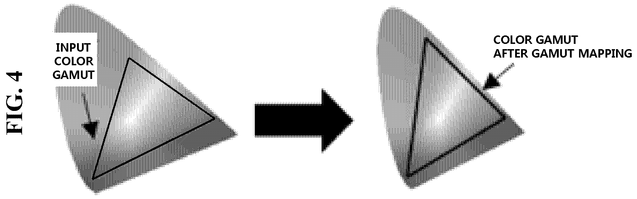

FIG. 4 is a diagram showing an example of color gamut conversion after Gamut mapping according to an embodiment of the present disclosure.

Referring to Figure 4, it shows the color gamut of the input terminal expressed in the color space and the color gamut after the gamut mapping.

Through the gamut mapping, a color distortion may be prevented and a color reproduction accuracy may be improved.

Again, Fig. 3 will be described.

Meanwhile, the image processing device 1 may apply a gain value for post-processing to the second image data of the second color space. The gain value may be a value for adjusting the ratio of RGB data. For example, when the color value of the second image data of the second color space exceeds a set range, the image processing device 1 may adjust the color value within the set range through the gain value.

The image processing device 1 may acquire the luminance level (Y level) of the second image data of the second color space (S305).

The image processing device 1 may calculate the luminance level from the second image data of the second color space. The luminance level may be divided into 1024 levels from 0 to 1023 based on 10 bits.

The image processing device 1 may obtain a saturation correction value corresponding to the luminance level (S307).

The saturation correction value may be referred to as a saturation gain value. The saturation correction value may represent an adjustment ratio of a saturation of the second image data of the second color space.

For example, when the saturation correction value is 0.1, it may indicate that an increase rate of the saturation is 10%, and when the saturation correction value is -0.1, it may indicate that a decrease rate of the saturation is -10%.

The image processing device 1 may obtain a plurality of saturation correction values corresponding to each of a plurality of luminance level ranges. The image processing device 1 may obtain the saturation correction value corresponding to the luminance level range to which the acquired luminance level belongs.

The image processing device 1 may classify image data included in the second image data of the second color space according to a preset number of luminance level ranges. The preset number may be four, but is not limited to this and may vary depending on the hardware specification of the image processing device 1 and the display 180.

In one embodiment, when the preset number is 4, the luminance level ranges based on 10 bits may be classified into a first luminance level range (0 to 255), a second luminance level range (256 to 512), a third luminance level range (513 to 768), and a fourth luminance level range (769 to 1023).

The range from 0 to 255 may be a low gray level area, the range from 256 to 768 may be a medium gray level area, and the range from 769 to 1023 may be a high gray level area.

In another embodiment, when the preset number is 4, the luminance level range based on 10 bits may be classified into a first luminance level range (0 to 81), a second luminance level range (82 to 163), a third luminance level range (164 to 255), and a fourth luminance level range (255 to 1023).

That is, the luminance level range may be set so that the low grayscale area is more subdivided. This is because color distortion often occurs in low grayscale areas due to a bit depth limitation, a non-linear color conversion, and a limitation of the image processing device (1).

In the example above, the number of luminance level ranges is 4, but the number of luminance level ranges may vary depending on the settings or hardware specifications of the image processing device 1.

The memory 260 of the image processing device 1 may store a plurality of saturation correction values corresponding to each of a plurality of luminance level ranges. The image processing device 1 may extract the saturation correction value corresponding to the luminance level range to which the luminance level obtained from the memory 260 belongs.

In another embodiment, the memory 260 may store a curve lookup table for saturation correction. The curve lookup table may be a table containing information about a curve that maps saturation correction values according to the luminance level of the second image data of the second color space. The curved lookup table may be a table used to correct only saturation while maintaining the luminance level.

The image processing device 1 may extract the saturation correction value corresponding to the luminance level of the second color gamut data from the curve lookup table.

The image processing device 1 may acquire a corrected image data of the second color space according to the saturation correction value corresponding to the luminance level while maintaining the luminance level of the second image data of the second color space (S309).

The image processing device 1 may correct the second image data of the second color space using the saturation correction value corresponding to the luminance level while maintaining the luminance level and.

The image processing device 1 may adjust a ratio of sub-image data values included in the second image data of the second color space to adjust saturation while maintaining the luminance level.

For example, when the second color gamut is the CIE 1976 color gamut, the saturation may be expressed as a length between a u'-coordinate value and a v'-coordinate value representing a color difference. A vector connecting the u'-coordinate and the v'-coordinate may be referred to as a color difference vector.

The image processing device 1 may adjust the saturation by adjusting the length of the color difference vector while fixing a L value representing a luminance. The image processing device 1 may adjust the saturation by changing the length of the color difference vector to a length corresponding to the saturation correction value while fixing the L value representing luminance.

The image processing device 1 may increase the saturation by increasing the length of the color difference vector while fixing the L value, and may decrease the saturation by decreasing the length of the color difference vector.

The image processing device 1 may output the corrected image data of the second color gamut to the display 180 (S311).

The display 180 may output an image whose the color gamut has been corrected based on the corrected image data of the second color gamut.

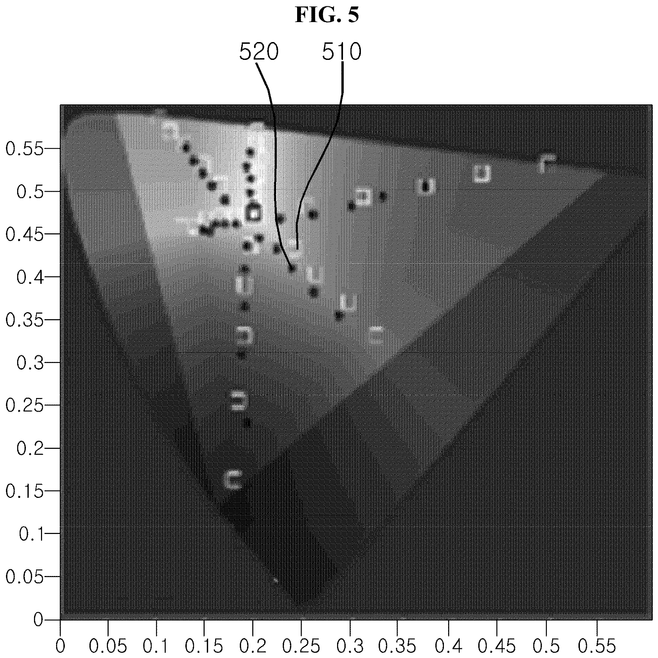

FIG. 5 is a diagram illustrating that color accuracy decreases in the low gray level area when the gamut mapping is applied regardless of the gray level of an image according to the prior art.

Referring to FIG. 5, it shows target coordinates and transformation coordinates of RGB data for the low gray level area displayed on a color diagram of the International Commission on Illumination (CIE). The low grayscale area may represent an area with a grayscale level of 0 to 255 based on 10 bits, but this is only an example.

When comparing target coordinates 510 and transformation coordinates 520 converted through the color gamut mapping, it may be confirmed that color distortion occurs.

In particular, an area of a gamut size formed by the transformation coordinates is narrower than an area of the gamut size formed by the target coordinates, which may cause a problem of poor color reproduction accuracy.

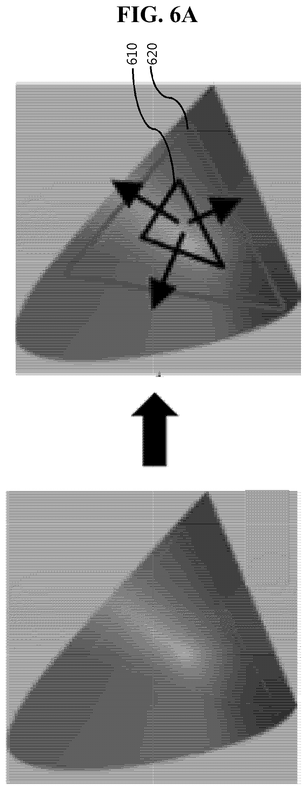

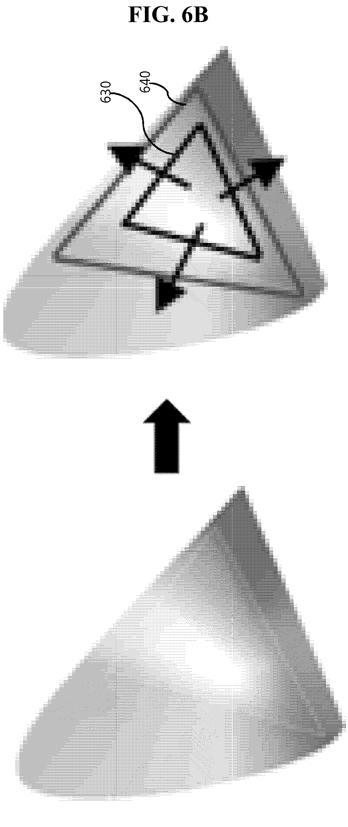

FIG. 6A and FIG. 6B are diagrams showing that the gamut size increases as the saturation correction value is adjusted after the gamet mapping according to an embodiment of the present disclosure.

FIG. 6A shows a case where the saturation correction value is increased for the low gray level area after the gamut mapping, and FIG. 6B shows a case where the saturation correction value is increased for the high gray level area after the gamut mapping.

The low grayscale area may be an area of pixels whose luminance level is in the range of 0 to 255 based on 10 bits, and the high grayscale area may be an area of pixels whose luminance level is in the range of 769 to 1023 based on 10 bits.

Referring to FIG. 6A , when the saturation correction value is increased while maintaining the luminance level after the gamut mapping, it may be seen that the gamut size for the low grayscale area increases from the existing first size 610 to the second size 620. Accordingly, the color accuracy may be improved.

Referring to FIG. 6B, it may be seen that when the saturation correction value is increased while maintaining the luminance level after the gamut mapping, the gamut size for the high grayscale area increases from the existing third size 630 to the fourth size 640. Accordingly, the color accuracy may be improved.

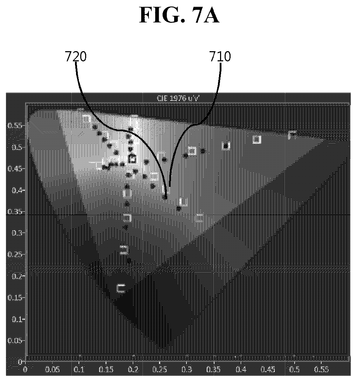

FIGS. 7A to 8B are diagrams for comparing a case where a saturation correction value is not applied to image data after the gamut mapping and a case where a saturation correction value is applied to image data after the gemut mapping according to an embodiment of the present disclosure.

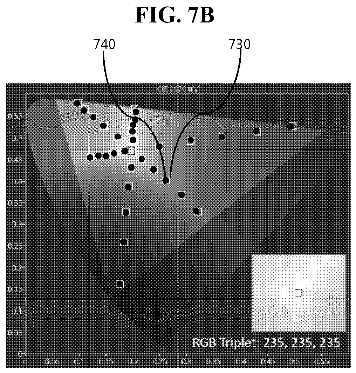

FIGS. 7A and 7B are diagrams for comparing the color accuracy on a chromaticity diagram of CIE 1976u'v' for a low gray level area.

In FIGS. 7A to 8B, the color accuracy of coordinates for each luminance level may be measured through a Kalman program.

FIGS. 7A to 8B may be experimental results obtained for input of an HDR image pattern.

FIG. 7A shows a case in which the saturation correction value is not applied to image data in the low gray level area after the gamut mapping, and FIG. 7b shows a case in which the saturation correction value is applied to image data in the low gray level area after the gamut mapping.

Referring to FIG. 7A, when comparing target coordinates 710 and ransformation coordinates 720 converted through color gamut mapping, it may be confirmed that color distortion occurs.

In particular, an area of the gumet size formed by the transformation coordinates is narrower than an area of the gumet size formed by the target coordinates, which may cause a problem of poor color reproduction accuracy.

Referring to FIG. 7B, by comparing target coordinates 730 and transformation coordinates 740 converted through the color gamut mapping, it may be confirmed that no the color distortion occurs.

Since the area of the gumet size formed by the transformation coordinates is similar to the area of the gumet size formed by the target coordinates, the color reproduction accuracy may be maintained high.

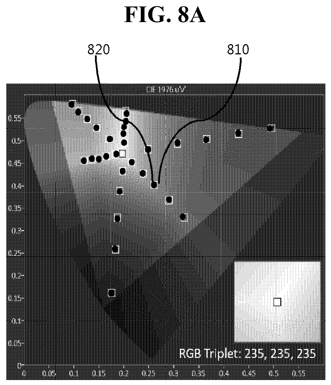

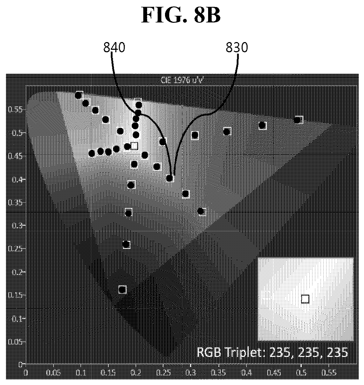

FIG. 8A may be a case in which a saturation correction value is not applied to image data in the high grayscale area after the gamut mapping, and FIG. 8b may be a case in which a saturation correction value is applied to image data in the high grayscale area after the gamut mapping.

Referring to FIG. 8A, by comparing the target coordinates 810 and the transformed coordinates 820 converted through color gamut mapping, it may be confirmed that no color distortion occurs.

Referring to FIG. 8B, by comparing the target coordinates 810 and the transformed coordinates 820 converted through color gamut mapping, it may be confirmed that no color distortion occurs.

In other words, a difference may appear more clearly in the low gray level area than in the high gray level area.

If there is a tendency for the actual color to become lighter (the gumet size becomes narrower) compared to the target color in the low grayscale area, it may be assumed that the embodiment of the present disclosure has not been applied.

Conversely, if there is a tendency for the target color and the actual color to match the low grayscale area (the characteristic of narrowing the gamet size is not confirmed), it may be assumed that the embodiment of the present disclosure has been applied.

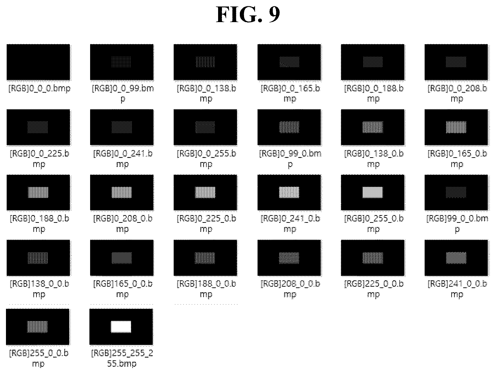

FIG. 9 is a diagram illustrating a method of checking color accuracy by measuring coordinate values on the CIE 1976u'v' chromaticity diagram to check whether an embodiment of the present disclosure is applicable.

A user may measure a calman saturation sweep to check the value of the output coordinates after the gamut mapping for a color pattern for each luminance level.

If the values of the target coordinates and the values of the transformation coordinates tend to not match as low grayscale area moves (the luminance level decreases), it may be assumed that the embodiment of the present disclosure has not been applied.

If the values of the target coordinates and the values of the transformed coordinates tend to match as low grayscale area moves toward the lower grayscale area (as the luminance level decreases), it may be inferred that the embodiment of the present disclosure has been applied.

The image processing device 1 according to an embodiment of the present disclosure may comprise at least one processor 250 configured to: convert a first image data of a first color space to a second image data of a second color space through a gamut mapping, obtain a luminance level of the second image data, obtain a saturation correction value corresponding to the obtained luminance level, and adjust a saturation of the second image data based on the obtained saturation correction value while maintaining the obtained luminance level.

wherein the at least one processor may obtain a correction value corresponding to a luminance level range to which the luminance level belongs among a plurality of luminance level ranges as the saturation correction value.

The image processing device 1 may further comprise a memory 260 configured to store the plurality of luminance level ranges and a plurality of saturation correction values corresponding to each of the plurality of luminance level ranges, and wherein the at least one processor 250 may extract the saturation correction value matching the luminance level range to which the luminance level belongs from the memory.

The at least one processor 250 may obtain a corrected image data by adjusting the saturation of the second image data, and output the corrected image data to a display 180.

The at least one processor 250 may increase or decrease the saturation of the second image data based on the saturation correction value obtained while maintaining the luminance level.

The luminance level range may be more detailed a low gray area is than a high gray area.

The image processing device 1 may further comprise a memory 260 configured to store a table including information about a curve mapping the saturation correction value according to the luminance level, and the at least one processor 250 may extract the saturation correction value mapped to the luminance level from the memory 260.

The at least one processor 250 may perform an EOTF (Electro-Optical Transfer Function) processing, a tone mapping, and an OETF (Opto-Electrical Transfer Function) processing on the first image data before the gamut mapping.

The first image data may be a High Dynamic Range (HDR) image data.

The first color space may be a RGB color space and a second color space may be a standard color space.

According to an embodiment of the present disclosure, the above-described method may be implemented with codes readable by a processor on a medium in which a program is recorded. Examples of the medium readable by the processor include a ROM (Read Only Memory), a Random Access Memory (RAM), a CD-ROM, a magnetic tape, a floppy disk, an optical data storage device, and the like.

The above-described display device is not limited to the configuration and method of the above-described embodiments, but the embodiments may be configured by selectively combining all or part of each embodiment such that various modifications may be made.

**Claims**

**1.** An image processing device (1), comprising:

at least one processor (250) configured to:

convert a first image data of a first color space to a second image data of a second color space through a gamut mapping, and
obtain a luminance level of the second image data,

**characterized in that** at least one processor (250) is further configured to:

obtain a saturation correction value corresponding to the obtained luminance level, and
adjust a saturation of the second image data based on the obtained saturation correction value while maintaining the obtained luminance level.

2. The image processing device (1) of claim 1, wherein the at least one processor (250) is configured to:
obtain a correction value corresponding to a luminance level range to which the luminance level belongs among a plurality of luminance level ranges as the saturation correction value.

3. The image processing device (1) of claim 2, further comprising a memory (260) configured to store the plurality of luminance level ranges and a plurality of saturation correction values corresponding to each of the plurality of luminance level ranges, and
wherein the at least one processor (250) is configured to extract the saturation correction value matching the luminance level range to which the luminance level belongs from the memory.

4. The image processing device (1) of claim 1 or 2, wherein the at least one processor (250) is further configured to:

obtain a corrected image data by adjusting the saturation of the second image data, and
output the corrected image data to a display.

5. The image processing device (1) of any one of claims 1 to 4, wherein the at least one processor (250) is configured to:
increase or decrease the saturation of the second image data based on the saturation correction value obtained while maintaining the luminance level.

6. The image processing device (1) of claim 2, or any one of claims 3 to 5 when depending on claim 2, wherein the luminance level range is more detailed a low gray area is than a high gray area.

7. The image processing device (1) of any one of claims 1 to 6, further comprising:

a memory (260) configured to store a table including information about a curve mapping the saturation correction value according to the luminance level, and
wherein the at least one processor (250) is configured to extract the saturation correction value mapped to the luminance level from the memory.

8. The image processing device (1) of any one of claims 1 to 7, wherein the at least one processor (250) is configured to:
perform an Electro-Optical Transfer Function, EOTF, processing, a tone mapping, and an Opto-Electrical Transfer Function, OETF, processing on the first image data before the gamut mapping.

9. A method of operating an image processing device, comprising:

converting a first image data of a first color space to a second image data of a second color space through a gamut mapping;
obtaining a luminance level of the second image data;
obtaining a saturation correction value corresponding to the obtained luminance level; and
adjusting a saturation of the second image data based on the obtained saturation correction value while maintaining the obtained luminance level.

10. The method of claim 9, wherein the step of obtaining the saturation correction value comprises:
obtaining a correction value corresponding to a luminance level range to which the luminance level belongs among a plurality of luminance level ranges as the saturation correction value.

11. The method of claim 10, further comprising:

storing, in a memory, the plurality of luminance level ranges and a plurality of saturation correction values corresponding to each of the plurality of luminance level ranges, and
wherein the step of obtaining the saturation correction value comprises:
extracting the saturation correction value matching the luminance level range to which the luminance level belongs from the memory.

12. The method of any one of claims 9 to 11, wherein the step of adjusting the saturation comprises:
increasing or decreasing the saturation of the second image data based on the saturation correction value obtained while maintaining the luminance level.

13. The method of claim 10, or any one of claims 11 to 12 when depending on claim 10, wherein the luminance level range is more detailed a low gray area is than a high gray area.

14. The method of any one of claims 9 to 13, further comprising:

storing, in a memory, a table including information about a curve mapping the saturation correction value according to the luminance level, and
wherein the step of obtaining the saturation correction value comprises:
extracting the saturation correction value mapped to the luminance level from the memory.

15. A non-transitory computer-readable recording medium on which a program for performing a method of operating an image processing device is recorded,
wherein the method corresponds to the method as defined in any one of claims 9 to 14.

# FIG. 1

**FIG. 2**

INPUT IMAGE DATA → 

PROCESSOR — 250

- COLOR GAMUT MAPPING UNIT — 210
- LUMINANCE LEVEL EXTRACTION UNIT — 220
- SATURATION VALUE ACQUISITION UNIT — 230
- COLOR GAMUT CORRECTION UNIT — 240

→ OUTPUT IMAGE DATA

MEMORY — 260

1

## FIG. 3

```
┌─────────────────────────────┐
│   ACQUIRE FIRST IMAGE DATA   │── S301
│     OF FIRST COLOR SPACE     │
└─────────────────────────────┘
              │
              ▼
┌─────────────────────────────┐
│  CONVERT FIRST IMAGE DATA OF │
│  FIRST COLOR SPACE OBTAINED  │── S303
│   THROUGH GAMUT MAPPING      │
│  INTO SECOND IMAGE DATA OF   │
│     SECOND COLOR SPACE       │
└─────────────────────────────┘
              │
              ▼
┌─────────────────────────────┐
│  ACQUIRE LUMINANCE LEVEL OF  │
│    SECOND IMAGE DATA OF      │── S305
│     SECOND COLOR SPACE       │
└─────────────────────────────┘
              │
              ▼
┌─────────────────────────────┐
│ OBTAIN SATURATION CORRECTION │
│   VALUE CORRESPONDING TO     │── S307
│      LUMINANCE LEVEL         │
└─────────────────────────────┘
              │
              ▼
┌─────────────────────────────┐
│ ACQUIRE CORRECTED IMAGE DATA │
│   OF SECOND COLOR SPACE      │
│   ACCORDING TO SATURATION    │
│      CORRECTION VALUE        │── S309
│ CORRESPONDING TO LUMINANCE   │
│   LEVEL WHILE MAINTAINING    │
│  LUMINANCE LEVEL OF SECOND   │
│    IMAGE DATA OF SECOND      │
│        COLOR SPACE           │
└─────────────────────────────┘
              │
              ▼
┌─────────────────────────────┐
│ OUTPUT CORRECTED IMAGE DATA  │
│   OF SECOND COLOR SPACE      │── S311
│       TO DISPLAY             │
└─────────────────────────────┘
```

# FIG. 4

INPUT COLOR GAMUT

COLOR GAMUT AFTER GAMUT MAPPING

**FIG. 5**

## FIG. 6A

**FIG. 6B**

## FIG. 7A

**FIG. 7B**

# FIG. 8A

## FIG. 8B

# FIG. 9

| [RGB]0_0_0.bmp | [RGB]0_0_99.bmp | [RGB]0_0_138.bmp | [RGB]0_0_165.bmp | [RGB]0_0_188.bmp | [RGB]0_0_208.bmp |
| [RGB]0_0_225.bmp | [RGB]0_0_241.bmp | [RGB]0_0_255.bmp | [RGB]0_99_0.bmp | [RGB]0_138_0.bmp | [RGB]0_165_0.bmp |
| [RGB]0_188_0.bmp | [RGB]0_208_0.bmp | [RGB]0_225_0.bmp | [RGB]0_241_0.bmp | [RGB]0_255_0.bmp | [RGB]99_0_0.bmp |
| [RGB]138_0_0.bmp | [RGB]165_0_0.bmp | [RGB]188_0_0.bmp | [RGB]208_0_0.bmp | [RGB]225_0_0.bmp | [RGB]241_0_0.bmp |
| [RGB]255_0_0.bmp | [RGB]255_255_255.bmp |

# EP 4 750 045 A1

**EUROPEAN SEARCH REPORT**

Application Number

EP 25 21 6180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/013151 A1 (ATKINS ROBIN [US] ET AL) 9 January 2020 (2020-01-09) * paragraph [0062] - paragraph [0118]; figures 1B, 1D, 4, 5 * ----- | 1-15 | INV. H04N1/60 G06T5/92 |
| X | US 2017/116963 A1 (WANAT ROBERT [US] ET AL) 27 April 2017 (2017-04-27) | 1,9,15 | |
| A | * paragraph [0033] - paragraph [0033] * * paragraphs [0070] - [0071] * * claim 1; figure 2 * ----- | 2-8, 10-14 | |

TECHNICAL FIELDS
SEARCHED (IPC)

H04N
G06T

The present search report has been drawn up for all claims

| Place of search | Date of completion of the search | Examiner |
|---|---|---|
| The Hague | 20 March 2026 | Lauritzen, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 6180

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | Publication date | Patent family member(s) | | Publication date |
|---|---|---|---|---|
| US 2020013151 A1 | 09-01-2020 | CN | 110447051 A | 12-11-2019 |
| | | EP | 3566203 A1 | 13-11-2019 |
| | | US | 2020013151 A1 | 09-01-2020 |
| US 2017116963 A1 | 27-04-2017 | NONE | | |

EPO FORM P0459

For more details about this annex : see Official Journal of the European Patent Office, No. 12/82